# EUROPEAN PATENT SPECIFICATION

(11) **EP 2 485 934 B1**
(45) Date of publication and mention of the grant of the patent: **12.04.2017**
(21) Application number: 10790672.9
(22) Date of filing: 01.10.2010
(51) Int. Cl.: B62D 21/16, B62D 49/00, B62D 61/08, B60K 17/356

(54) **FARM TRACTOR**
TRAKTOR
TRACTEUR AGRICOLE

(30) Priority: 06.10.2009 IT AN20090072
(43) Date of publication of application: 15.08.2012
(73) Proprietor: Facma S.r.l., 01030 Vitorchiano (VT) (IT)
(72) Inventor: BELLACHIOMA, Marcello, I -01030 Vitorchiano (VT) (IT); BELLACHIOMA, Renzo, I -01030 Vitorchiano (VT) (IT)
(74) Representative: Cacciamani, Clizia
(86) International application number: PCT/IT2010/000413
(87) International publication number: WO 2011/042926

(56) References cited:
- FR-A- 1 423 087
- FR-A1- 2 611 612
- GB-A- 916 749
- GB-A- 2 134 860
- US-A- 3 789 929
- US-A- 4 063 608
- US-A- 4 126 198

## Description

The present invention relates to agricultural machinery and in particular to a farm tractor.

Various kinds of agricultural machinery exist and nowadays the market has become highly specialized; in particular, vehicles having an optimum manoeuvrability while being able to ensure an adequate degree of safety are required in the fruit-growing sector. In fact, one of the problems of agricultural machinery is the risk of overturning which is generally not lessened by the use of suitable protection means since such means, which are in the form of cabins, protective compartments or roll-bars, are removed in order to allow access underneath the foliage of trees.

US 4.126.198 discloses a three-wheeled farm vehicle having an elongated frame to carry a sprayer or a fertilizer spreader, or the like. Two transversely spaced rear wheels are independently driven by hydraulic motors.

US 3.789.929 discloses a three wheel tractor having a hydraulic motor contained within each of the wheels for rotating them.

US 4.063.608, on which disclosure the preamble features of claim 1 are based, discloses a vehicle equipped for locomotion through the use of hydraulic motors associated with the driving wheels. The vehicle is equipped with a hydrostatic transmission system that operates at low or high speeds, and which provides high torque for pulling heavy loads and a by-pass to permit freewheeling of the vehicle.

FR 1.423.087 discloses a tool holder farm comprising a beam-frame constituted by a firm box serving to house the oil reserves of the hydraulic control circuit.

GB 916.749 discloses a farm tractor having a continuous cavity which serves as a fuel tank.

Therefore, the object of the present invention is to provide an agricultural machine which is able, on the one hand, to operate on any type of terrain, also in severe operating conditions, and, on the other hand, is useful for performing the operations which are typical of fruit-growing and the like without neglecting the safety of the operator. The machine in question must be able to be manoeuvred with great ease and must be designed as a compact structure.

The present invention therefore relates to a farm tractor comprising a load-bearing chassis, to which three wheels, i.e. two rear wheels and one front wheel, are connected, each wheel being provided with driving means independent from the other wheels, said front wheel being steeringly mounted in said chassis; the chassis comprises a deck lying in a middle plane substantially corresponding to the plane where the rotational axes of the wheels lie, wherein said driving means comprise for each wheel a hydraulic motor being connected to pressurized fluid-generating means coupled to an internal combustion engine, and wherein the chassis has a height from the ground of between 200 and 300 mm.

In a preferred embodiment, said driving means comprise a hydraulic motor for each wheel, which hydraulic motor is connected to pressurized fluid-generating means coupled to an internal combustion engine. Each hydraulic motor is positioned within the rim of the respective wheel. The pressurized-fluid generating means may be a variable flow-rate pump; driving of the wheels is instead performed preferably by means of variable-displacement hydraulic motors, particularly twin-displacement motors, and dual reduction ratio speed reducers.

The chassis is preferably formed as a box-like body which can act both as a fuel tank and as a fluid tank. The completely hydrostatic transmission allows positioning of the operating and control cabin considerably lower down compared to vehicles which are equipped with a mechanical transmission. The chassis (seat and centre of gravity), in view of the measures adopted, may be decidedly much lower relative to the ground, up to 500-700 mm from the ground, and preferably 700mm from the ground. Further advantages and characteristic features of the machine according to the present invention will be apparent from the following description of an embodiment thereof, provided by way of a non-limiting example, with reference to the accompanying drawings in which:
Figure 1 is a schematic side elevation view of an embodiment of the machine according to the present invention; and
Figure 2 is a plan view of a schematic diagram illustrating operation of the machine according to the present invention.

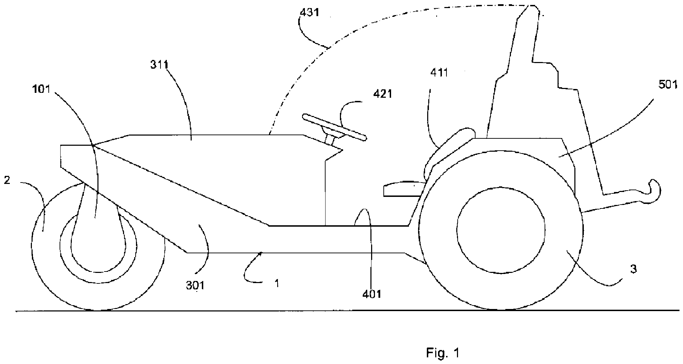

Figure 1 shows schematically the machine according to the invention; 1 denotes the chassis of said machine. The said chassis 1 comprises a box-like body 301 inside which both the fuel and the other fluids used in the machine according to the invention can be contained. The bonnet 311 houses instead the components of the driving system, which are described and illustrated more clearly below. The front end of the chassis 1 supports the fork member 101 to which the wheel 2 is connected. The rear wheels 3 are arranged on the sides of the rear portion 501 of the chassis 1; the driving zone 401 housing the steering wheel 421 and the seat 411 is situated between the bonnet 311 and the rear portion 501 of the chassis 1. A protective structure 431 (overall maximum height of roll-bar or cabin: 1.60m), shown in broken lines in the figure, is positioned above the driving zone. As can be noted from the figure, the deck of the chassis lies substantially in the plane where the rotational axes of the wheels lie.

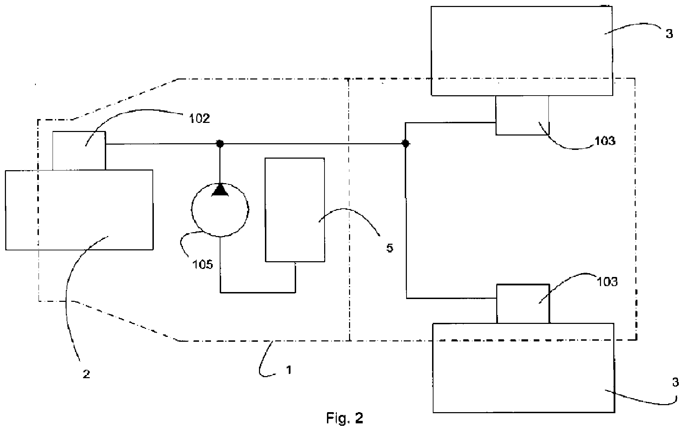

Figure 2 shows a schematic diagrammatic plan view relating to operation of the machine according to the invention, where the same parts are indicated by the same numbers. As can be noted, the engine 5 operates the pump 105 which in turn supplies the speed-reduction units 102 and 103 which are respectively connected to the front wheel 2 and to the rear wheels 3.

The operating principle of the machine according to the present invention will become clear from the description below. As already mentioned above, use of a completely hydraulic power transmission eliminates in fact the need for given structural constraints and allows the chassis to be designed with a form which is much more suitable for the uses which are normally subject to the risk of overturning.

The chassis 1 is load-bearing, preferably made of steel and acts as a fuel tank and fluid tank, with a consequent reduction in the dimensions and displacement of the weights into the bottom perimetral part; advantageously the entire part of the chassis facing the ground is protected by an additional steel sheet. The significantly lower position of the chassis is derived mainly from the absence of a mechanical transmission.

The engine 5 is a Diesel internal-combustion engine with a power of between 60 and 90kW operating a variable flow-rate pump. The pump supplies the kinematic system comprising three hydraulic motors positioned inside the respective rim of each wheel; each motor is connected to the wheel by means of a speed reducer. The driving torque is perfectly distributed among the three wheels; the hydrostatic transmission also performs perfectly the function of differential for torque distribution depending on the slippage. At speeds greater than 15km/h the driving torque is distributed only to the rear wheels, leaving the front wheel to act solely as a steering wheel.

As a result of the hydrostatic transmission, the operator is no longer involved with the functions of adjusting the speed and torque using the clutch/gearbox system. A single control system controls the forward/rear movement and modulates the speed. The same system is provided with a safety coupling in order to prevent possible accidental engagement.

The pump 105 is of the type with a variable flow-rate and the hydraulic motors 102, 103 are of the twin-displacement type with the respective dual ratio speed reducers; this allows the use of four speed ranges for each direction of travel. The variation in flow-rate is obtained by means of a simple electro-hydraulic or manual control system which regulates directly the stroke length of the connecting rods operating the hydraulic pistons. The choice of the reduction ratio and the displacement of the motors is determined by the operator via a hydraulic control system.

The machine thus conceived may be designed so as to be decidedly much lower with respect to the ground. In particular, the chassis may have a height preferably equal to 250mm. This allows decidedly more sophisticated operation within the fruit-growing sector, providing a machine which is able to move easily underneath fruit trees without creating safety problems for the operator. In any case, the machine according to the invention is very versatile and has a very broad scope of application mainly due to its stability and its low centre of gravity.

## Claims

1. Farm tractor comprising a load-bearing chassis (1) to which three wheels, i.e. two rear wheels (3) and one front wheel (2), are connected, each wheel being provided with driving means (102, 103) independent from the other wheels, said front wheel (2) being steeringly mounted (101) in said chassis (1); **characterised in that** the chassis comprises a deck lying in a middle plane substantially corresponding to the plane where the rotational axes of said wheels (2, 3) lie, wherein said driving means comprise for each wheel a hydraulic motor (102, 103) being connected to pressurized fluid-generating means (105) coupled to an internal combustion engine (5), and wherein the chassis (1) has a height from the ground of between 200 and 300 mm.

2. Farm tractor according to claim 1, wherein the chassis (1) has a height from the ground of 250 mm.

3. Farm tractor according to claim 1 or 2, wherein each hydraulic motor (102, 103) is positioned within the rim of the respective wheel (2, 3).

4. Farm tractor according to either one of claims 2 or 3, wherein the pressurized fluid-generating means may be a variable flow-rate pump (105).

5. Farm tractor according to any one of the preceding claims 2 to 4, wherein said driving means comprise variable-displacement hydraulic motors (102, 103), particularly twin-displacement motors, and dual reduction ratio speed reducers.

6. Farm tractor according to any one of the preceding claims 1 to 5, wherein the chassis (1) is preferably formed as a box-like body which can act both as a fuel tank and as a fluid tank.

## Patentansprüche

1. Ackerschlepper, der einen lasttragenden Unterbau (1) umfasst, an dem drei Räder angebracht sind, d.h. zwei Hinterräder (3) und ein Vorderrad (2), jedes Rad ist mit einem Antriebsmittel (102, 103) unabhängig von den anderen Rädern ausgestattet, besagtes Vorderrad (2) ist steuernd (101) an besagten Unterbau (1) montiert; ausgezeichnet dadurch, dass der Unterbau eine Tragfläche in einer mittleren Ebene umfasst, die im Wesentlichen der Ebene entspricht, wo die Drehachsen besagter Räder (2,3) liegen, wobei besagtes Antriebsmittel für jedes Rad einen Hydraulikmotor (102, 103) umfasst, der an ein unter Druck stehendes Fluid erzeugendes Mittel (105) angeschlossen ist, das an einen internen Verbrennungsmotor (5) gekoppelt ist und wobei der Unterbau (1) eine Bodenhöhe zwischen 200 und 300 mm hat.

2. Ackerschlepper gemäß Anspruch 1, wobei der Unterbau (1) eine Bodenhöhe von 250 mm hat.

3. Ackerschlepper gemäß Anspruch 1 oder 2, wobei jeder Hydraulikmotor (102, 103) innerhalb der Fege des jeweiligen Rads (2,3) positioniert ist.

4. Ackerschlepper gemäß einem der Ansprüche 2 oder 3, wobei das unter Druck stehende Fluid erzeugende Mittel eine variable Durchsatzpumpe sein kann (105).

5. Ackerschlepper gemäß einem der vorherigen Ansprüche 2 bis 4, wobei besagtes Antriebsmittel Verstellmotoren (102, 103), speziell Doppel-Verstellmotoren und Drehzahlminderer mit Doppeluntersetzungsverhältnis, umfasst.

6. Ackerschlepper gemäß einem der vorherigen Ansprüche 1 bis 5, wobei der Unterbau (1) vorzugsweise wie ein kistenähnlicher Körper geformt ist, der sowohl als Treibstofftank als auch als Flüssigkeitstank dienen kann.

## Revendications

1. Tracteur agricole comprenant un châssis porteur (1) auquel trois roues, à savoir deux roues arrière (3) et une roue avant (2), sont attachées, chaque roue étant fournie de systèmes d'entraînement (102, 103) indépendants des autres roues, ladite roue avant (2) étant montée (101) dans ledit châssis (1) ; **caractérisé en ce que** le châssis comprend une plate-forme se trouvant dans un plan médian correspondant substantiellement au plan dans lequel les axes de rotation desdites roues (2, 3) se situent, dans lequel lesdits systèmes d'entraînement comprennent, pour chaque roue, un moteur hydraulique (102, 103) étant raccordé à des systèmes pressurisés de génération de fluide (105) couplés à un moteur à combustion interne (5), et dans lequel le châssis (1) présente une hauteur par rapport au sol comprise entre 200 et 300 mm.

2. Tracteur agricole selon la revendication 1, dans lequel le châssis (1) a une hauteur par rapport au sol de 250 mm.

3. Tracteur agricole selon la revendication 1 ou 2, dans lequel chaque moteur hydraulique (102, 103) est positionné à l'intérieur de la jante de la roue respective (2, 3).

4. Tracteur agricole selon l'une quelconque des revendications 2 ou 3, dans lequel les systèmes pressurisés de génération de fluide peuvent être une pompe à débit variable (105).

5. Tracteur agricole selon l'une quelconque des revendications précédentes de 2 à 4, dans lequel lesdits systèmes d'entraînement comprennent des moteurs hydrauliques à cylindrée variable (102, 103), en particulier des moteurs bicylindres, et des réducteurs doubles de rapport de vitesse.

6. Tracteur agricole selon l'une quelconque des revendications précédentes de 1 à 5, dans lequel le châssis (1) est de préférence réalisé en forme de boîte pouvant agir à la fois comme réservoir d'essence que comme réservoir de fluide.
